(19) **Europäisches Patentamt / European Patent Office / Office européen des brevets**

(11) **EP 3 470 243 B1**

(12) **EUROPEAN PATENT SPECIFICATION**

(45) Date of publication and mention
of the grant of the patent:
**07.10.2020 Bulletin 2020/41**

(51) Int Cl.:
**B60C 11/11** (2006.01)   **B60C 11/03** (2006.01)
**B60C 11/12** (2006.01)   **B60C 11/13** (2006.01)

(21) Application number: **17813321.1**

(22) Date of filing: **13.06.2017**

(86) International application number:
**PCT/JP2017/021861**

(87) International publication number:
**WO 2017/217425 (21.12.2017 Gazette 2017/51)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2016 JP 2016117229**

(43) Date of publication of application:
**17.04.2019 Bulletin 2019/16**

(73) Proprietor: **Bridgestone Corporation
Tokyo 104-8340 (JP)**

(72) Inventor: **HIRAISHI Tomohiro
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 977 230       EP-A2- 2 781 374
WO-A1-02/102611       WO-A1-2004/011282
WO-A1-2014/148260     WO-A1-2015/016005
WO-A1-2015/052966     JP-A- 2015 147 545**

**Description**

TECHNICAL FIELD

The present disclosure relates to tires, particularly to high performance tires having high drainage performance, braking performance and turning performance.

BACKGROUND

Conventionally, particularly in the field of high performance tires, it is known to enlarge blocks in order to improve the block rigidity during load rolling. For example, PTL 1 discloses a tire in which blocks are enlarged to improve the block rigidity, and thereby the cornering force (CF) characteristics are improved. Attention is drawn to the disclosures of EP2977230A1, EP2781374A2 and JP2015-147545A.

CITATION LIST

Patent Literature

PTL 1: JPH 10-297216 A

SUMMARY

(Technical Problem)

When the blocks of a tire tread are enlarged as described above, the block rigidity is improved; however, there is a problem that the grounding property in the blocks deteriorates especially during high speed rolling of the tire. That is, during rolling of the tire, when a load is applied to the tread surface, the force concentrates on the boundaries between the groove bottom and the groove walls of each width direction groove, such that a stress is generated toward the inside of each block from the side walls of the block, causing deformation that the end portions in the width direction of each block are pushed up. As a result, the ground contact pressure at the central portion of each block becomes lower than the surroundings. Particularly, at the time of high speed rotation, the ground contact pressure of the tire tread surface is higher than that at the time of low speed rotation, such that deterioration of the grounding property inside each block becomes remarkable. As described above, the grounding property in each block becomes non-uniform, such that the drainage performance, braking performance and turning performance might have not been sufficiently improved. In other words, the larger the blocks, the greater the difference in ground contact pressure between the central portion and the end portions of each block, such that the problem remains in that the effect of enlarging the blocks cannot be sufficiently enjoyed.

It is an object of the present disclosure to provide a high performance tire that improves the grounding property of blocks, and thereby further improving the drainage performance, braking performance and turning performance.

(Solution to Problem)

The inventor conducted a diligent investigation in order to solve the above problem. Through this investigation, the inventor discovered that in order to increase the ground contact pressure at the central portion of a block, it is effective to adopt a shape that protrudes toward the central portion. On the other hand, since the rubber of the protruding portion swells toward the sides of the block at the time of grounding, it was found that a protruding shape is not such useful for increasing the ground contact pressure at the central portion. Then, it was found that by forming a part of each width direction groove like a sipe having a very narrow opening width, the rubber of the protruding portion can be prevented from swelling toward the sides of the block, and the adjacent blocks protrude in a manner supported by each other, enabling an increase in ground contact pressure at the central portion.

That is, the inventor discovered that in order to avoid deterioration in grounding property of a block, it is effective to adopt a shape that protrudes toward the central portion of the block and suppress swelling of the protruding rubber toward width direction grooves by forming a part of each width direction groove to be a sipe, and thereby completed the present disclosure.

A first aspect of the present invention provides a tire as claimed in claim 1. A second aspect of the present invention provides a tire as claimed in claim 2.

Here, a "ground contact width" in the present disclosure refers to the maximum straight line distance in the tread width direction on a contact surface with a flat plate, when the tire is mounted on an applicable rim and placed perpendicularly to the flat plate in a stationary state with the air pressure set to be a prescribed value, and a load corresponding to a prescribed mass is applied thereto. Further, a "ground contact length" refers to the maximum straight line distance in the tread circumferential direction on the same contact surface.

Furthermore, an "applicable rim" refers to a rim prescribed by an industrial standard which is valid in an area where the tire is manufactured and used, and examples of the industrial standard include: "JATMA (The Japan Automobile Tyre Manufacturers Association, Inc.) YEAR BOOK" of Japan; "STANDARDS MANUAL" of ETRTO (The European Tyre and Rim Technical Organisation) of Europe; and "TRA (THE TIRE AND RIM ASSOCIATION INC.)Year Book" of the United States.

(Advantageous Effect)

According to the present disclosure, a high performance tire having high drainage performance, braking performance and turning performance can be provided.

BRIEF DESCRIPTION OF THE DRAWINGS

In the accompanying drawings:

FIG. 1 is a developed view illustrating a tread surface of a tire according to a first embodiment of the present disclosure;
FIG. 2 is a partially enlarged view taken of FIG. 1;
FIGS. 3A is a cross-sectional view taken from line A-A in FIG. 1;
FIGS. 3B is a cross-sectional view taken from line B-B in FIG. 1;
FIGS. 3C is a cross-sectional view taken from line C-C in FIG. 1;
FIG. 4 illustrates another embodiment of A-A section in FIG. 1; and
FIG. 5 is a developed view illustrating a tread surface of a tire according to a second embodiment of the present disclosure.

DETAILED DESCRIPTION

Hereinafter, a pneumatic tire of the present disclosure (hereinafter also referred to as "the tire") is described in details with reference to the accompanying drawings by exemplifying embodiments thereof.
Although it is omitted in the drawings, a regular tire structure comprising a pair of sidewall portions respectively extending from a pair of bead portions in a radially outward direction; a carcass composed of an organic fiber cord or a steel cord ply extending from one bead portion to the other bead portion through a crown portion including a tread portion formed to extend between the sidewall portions; and a belt composed of a steel cord layer disposed between the carcass and the tread.

[First Embodiment]

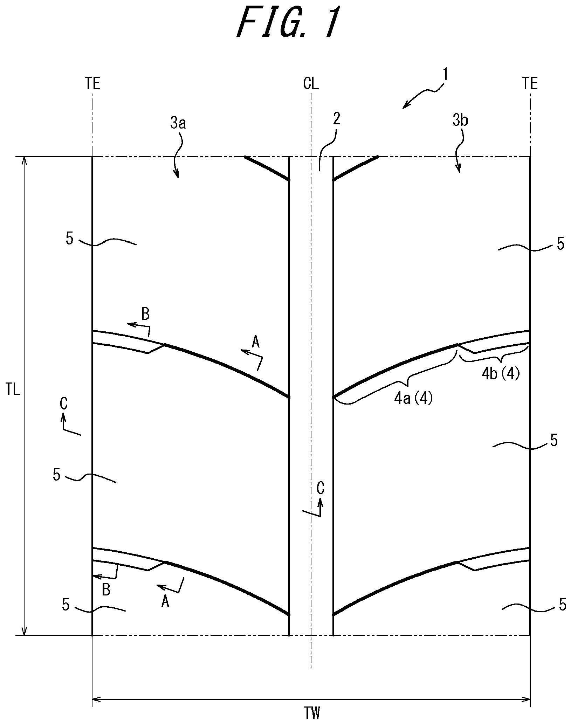

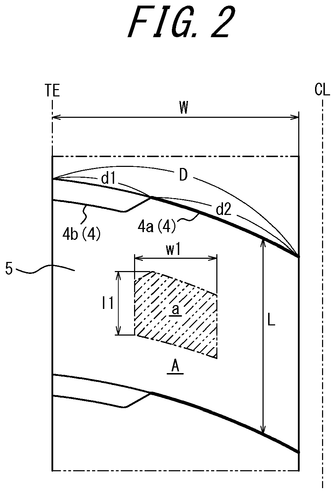

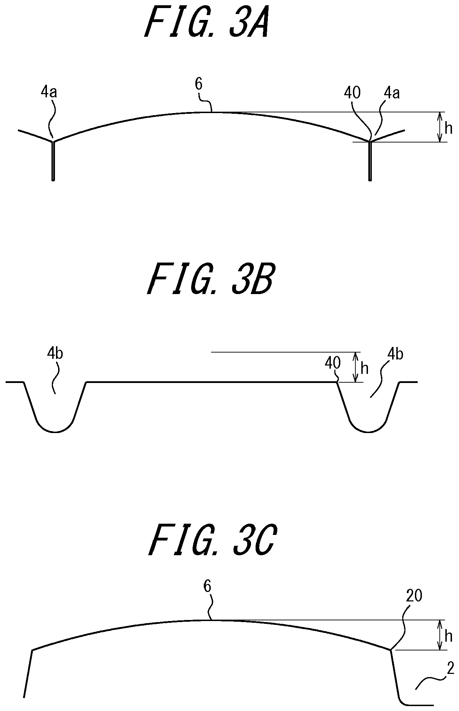

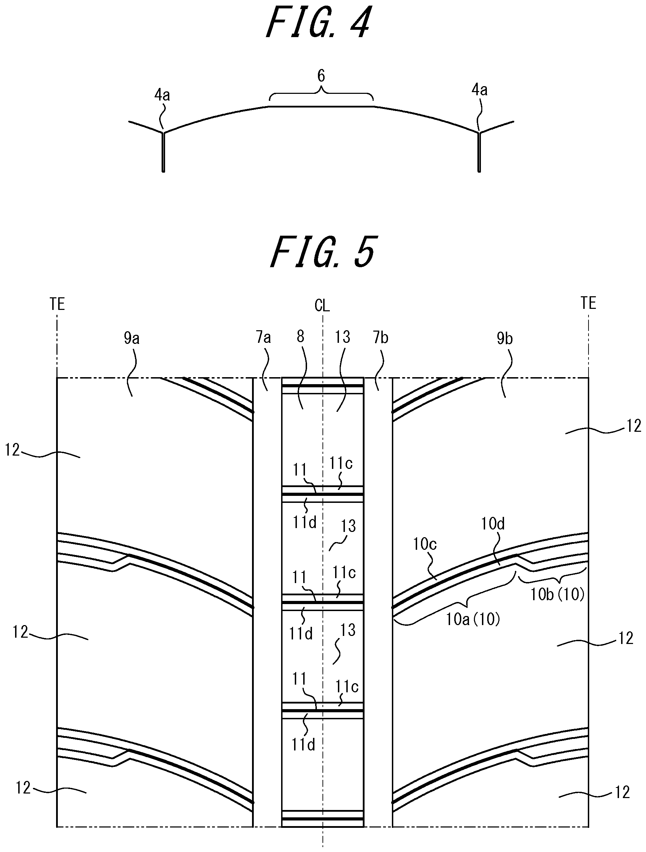

FIG. 1 is a developed view illustrating a tread surface of a tire according to a first embodiment of the present disclosure, and FIG. 2 is a partially enlarged view thereof. In the present tire, a tread surface 1 of the tread (Hereinafter, it is referred to as "the tread surface".) is divided into a plurality of land portions 3a and 3b by at least one circumferential groove extending along a tire equator CL, specifically, a circumferential groove 2 in the illustrated example, and tread edges TE.
At least one of the land portions 3a and 3b, specifically, both of the land portions 3a and 3b in the illustrated example, are divided into a plurality of blocks 5 by a plurality of width direction grooves 4 communicating with the circumferential groove 2 and the tread edges TE. The circumferential groove 2 and the width direction grooves 4 are provided in the tread to ensure drainage performance.
Here, each width direction groove 4 is constituted by a sipe portion 4a extending from the circumferential groove 2 to a tread edge TE side and a groove portion 4b extending from the sipe portion 4a to the tread edge TE side. A sipe portion is a groove having an extremely narrow width such that it closes in the tread footprint during rolling of the tire, and a groove portion is a groove having a width such that it remains open in the tread footprint.
Each block 5 has a shape that protrudes from the four sides of the block 5 toward the central portion. Regarding this protruding shape, cross-sectional views taken from line A-A, line B-B and line C-C in FIG. 1 are respectively illustrated in FIGS. 3A, 3B and 3C. As illustrated in these cross-sectional views, the block 5 has a shape that protrudes from the four sides of the block to the central portion conforming to an arc.
As described above, in the case that the block 5 defined by the circumferential groove 2 and the width direction grooves 4 is a conventional one whose surface is substantially flat, the ground contact pressure at the end portions of the block is higher than that at the central portion. On the contrary, according to the present disclosure, since the ground contact pressure of the central portion when the block grounds can be increased by adopting a shape that protrudes from the four sides of the block toward the central portion, the ground contact pressure difference between the central portion and the end portions becomes extremely small. Here, during rolling of the tire, if the rubber of the central portion which preferentially contacts the road surface swells and deforms toward the width direction groove sides of the block, it becomes difficult to enjoy the effect of increase in ground contact pressure due to the aforementioned protrusion of the central portion, and therefore it is essential to provide a sipe portion 4a in each width direction groove 4. Provided with the sipe portion 4a, swelling deformation of the block rubber toward the width direction groove 4 sides is suppressed, and therefore an increase in ground contact pressure due to the protrusion of the block central portion is realized.
As illustrated in FIGS. 3A, 3B and 3C, the block 5 has a shape that protrudes from the four sides which are respectively in contact with the circumferential groove 2, the tread edge TE and the width direction grooves 4 defining the block 5 to an apex 6, conforming to an arc shape in the illustrated example. By forming the block 5 into such a shape to protrude toward the apex 6 in the form of, for example, an arc, it is possible to increase the ground contact pressure of the central portion when the block grounds, and thereby suppressing the ground contact pressure difference between the central portion and the end portions. Additionally, such a protruding shape also contributes to make it easier for moisture in the ground contact region of the tread to be discharged toward the circumferential groove 2, the tread edges TE, and the width direction grooves 4 when grounding on a road surface.
Further, in the FIGS. 3A, 3B and 3C, the apex 6 is the apex of the protrusion; however, as illustrated in FIG. 4, it may have a certain area spreading at the same height.

Here, each width direction groove 4 includes a sipe portion 4a. The sipe portion 4a may be disposed at a tire tread edge side, or at the central portion of the width direction groove 4; however, is preferably disposed at the tire equator side. Since the ground contact pressure distribution on the tread surface during straight running becomes higher at the central portion than at the tread edges, by suppressing swelling deformation of the block portion at the tire equator side having a higher ground contact pressure in the block, equalization of the ground contact pressure distribution of the entire block 5 can be reliably achieved.

In the present disclosure, as illustrated in FIG. 2, it is preferable that the sipe portion 4a has a longitudinal direction (the sipe extension direction) length d2 that is 30% to 90% of the total longitudinal direction length D of the width direction groove 4. This is because, by setting it to be 30% or more, swelling deformation of the block rubber toward the width direction groove when the central portion of the block 5 grounds on a road surface is sufficiently suppressed. Preferably, 55% to 65% is effective for realizing better suppression effect of swelling deformation of the block 5. On the other hand, by setting it to be 90% or less, swelling deformation of the block rubber toward the width direction groove 4 side is suppressed without causing deterioration in drainage performance.

In the present disclosure, it is preferable that the sipe portion 4a of the width direction groove 4 has an opening width of 0.05 mm to 0.5 mm. By defining the opening width of the sipe portion 4a as described above, it is possible to more effectively suppress swelling deformation of the block 5 toward the side surface, and suppress the grounding property difference between the end portions and the central portion of the block 5. Further, it is possible to minimize reduction in rigidity due to formation of the width direction groove 4.

The opening width of the sipe portion 4a is more preferably 0.05 mm to 0.4 mm, and further preferably 0.05 mm to 0.3 mm. With such a configuration, it is possible to prevent reduction in rigidity of the block 5, while more effectively equalizing the ground contact pressure distribution of the block. Further, in order to ensure sufficient drainage performance by the width direction groove 4, it is preferable that the groove portion 4b has an opening width of 0.1 mm to 0.5 mm.

In the present disclosure, as illustrated in FIG. 2, in the planar view, it is preferable that the apex 6 has an area (area "a") that is 1/4 or less of the total area A of the block 5. Thereby, equalization of the ground contact pressure due to provision of the apex 6 can be realized more effectively. It is more preferably 1/6 or less, and further preferably 1/9 or less.

Also, the apex 6 has a tread width direction maximum length w1 that is 30% to 40% of the width direction length W of the block; and the apex 6 has a tread circumferential direction maximum length l1 that is 30% to 40% of the circumferential direction length L of the block. With such a configuration, it is possible to suppress decrease in footprint area of the block even if the load applied to the tread surface is relatively low.

In the protrusion of the block, it is preferable that the apex 6 is located within the overlapping region between the intermediate portion when the width direction length W of the block 5 is equally divided into three and the intermediate portion when the circumferential direction length L of the block 5 is equally divided into three. With such a configuration, the ground contact pressure distribution of the block 5 can be further equalized. In the case that the block 5 is not rectangular, it is preferable that the overlapping region has a shape along the sides constituting the block 5 and substantially similar to the block 5. Further, as illustrated in FIG. 2, it is possible to provide a notch parallel to the end portion of the groove portion 4b of the width direction groove 4. The same applies to the shape of the apex 6.

It is preferable that the presently disclosed block 5 protrudes from the opening edge 40 of each width direction groove 4 and the opening edge 20 of the circumferential groove 2 toward the central portion. In FIGS. 3A, 3B and 3C, the radial direction height from the opening edge 40 of the width direction groove 4 to the apex 6 and the radial direction height from the opening edge 20 of the circumferential groove 2 to the apex 6 are indicated as h.

Regarding the protrusion of the block, it is preferable that the block 5 has a tire radial direction height h up to the apex 6 and a width direction length W that satisfy the following equation:

$$0.01 \leq h/W \leq 0.023.$$

When h/W is less than the lower limit, the grounding property cannot be improved. On the other hand, when h/W exceeds the upper limit, the footprint area decreases.

Further, regarding the protrusion of the block, it is preferable that the tire radial direction height h from the opening edge 40 of the width direction groove 4 to the apex 6 is 0.5 mm to 1.5 mm. This is because, by providing a sufficient height difference between the end portions and the central portion of the block, it becomes easy for the rubber at the central portion to preferentially contact the road surface during rolling of the tire. When it is 0.5 mm or more, equalization of the ground contact pressure distribution can be achieved; however, when it exceeds 1.5 mm, the footprint area decreases, which may result in deterioration in grounding property. It is more preferably 0.8 mm to 1.0 mm. Thereby, the ground contact pressure can be further equalized.

The width direction length W of the block 5 is 28% to 70% with respect to the ground contact width TW of the tire. With such a configuration, it is possible to ensure block rigidity that is enough to compete with side forces during high speed turning, which leads to improvement in movement performance.

It is preferably 33% to 42%, and further preferably 36% to 40%. By setting this numerical range, it is possible to equalize the ground contact pressure distribution at a high level while maintaining sufficient block rigidity.

It is preferable that the circumferential direction length L of the block 5 is 35% to 49% with respect to the ground contact length TL of the tire. That is, during acceleration and deceleration of the vehicle, an input acting in the circumferential direction is generated in the tire; however, by having such a configuration, it is possible to ensure block rigidity that is enough to compete with such an input and improve the movement performance.

It is more preferably 38% to 46%, and further preferably 41% to 44%. By setting this numerical range, it is possible to equalize the ground contact pressure distribution at a high level while maintaining sufficient block rigidity.

[Second Embodiment]

Next, a tire according to a second embodiment of the present disclosure is described with reference to FIG. 5. FIG. 5 is a developed view illustrating the tread surface of the tire according to the second embodiment of the present disclosure. Components in FIG. 5 that are similar to those in FIG. 1 are given the same reference signs as in FIG. 1 and the description thereof is omitted. As illustrated in FIG. 5, in this tire, the tread surface 1 is divided into three land portions by two circumferential grooves 7a and 7b extending along the tire equator CL and the tread edges TE. In the illustrated example, a central land portion 8 defined by the circumferential grooves 7a and 7b, and shoulder land portions 9a and 9b respectively defined by the circumferential groove 7a and a tread edge TE and by the circumferential groove 7b and the other tread edge TE are formed.

The shoulder land portions 9a and 9b are divided into a plurality of blocks 12 by a plurality of width direction grooves 10. The width direction grooves 10 and the blocks 12 have the same configuration as that of the width direction grooves 4 and the blocks 5 in FIG. 1. By disposing land portions having such a configuration at the tread edges sides of the tire, higher turning performance can be ensured. That is, since the ground contact pressure distribution in the tread width direction of the tire during turning becomes higher in the areas adjacent to the tread edges than the central portion, by equalizing the ground contact pressure distribution in the areas adjacent to the tread edges, the turning performance can be improved. Further, moisture in the ground contact region of the tread can be easily discharged when grounding on a road surface.

On the other hand, the central land portion 8, as illustrated, is divided into a plurality of blocks 13 by a plurality of sipes 11 extending in the tread width direction.

Like the blocks 5 in the first embodiment, the blocks 13 preferably have a shape that protrudes toward the central portion. Thereby, even in the vicinity of the tire equator, the ground contact pressure distribution of each block can be equalized, and the drainage performance can be improved. Further, during rolling of the tire, if the rubber of each central portion which preferentially contacts the road surface swells and deforms, it becomes difficult to enjoy the effect of increase in ground contact pressure due to protrusion of the central portions. Therefore, by dividing the blocks 13 by the sipes 11, swelling deformation of the block rubbers toward the sipe 11 sides is suppressed, and as a result, an increase in ground contact pressure due to protrusion of the central portion of each block is realized.

As illustrated, each sipe 11 has a certain opening width, and similarly to the width direction grooves 4 in FIG. 1, may be constituted by a sipe portion and a groove portion. By setting a part thereof to have an opening width that is substantially the same as that of the groove portion 4b of each width direction groove 4, better drainage performance can be ensured.

Here, since the central land portion 8 is divided into a plurality of blocks 13 by a plurality of sipes 11, and the blocks 13 have a protruding shape, it is possible to increase the ground contact pressure at the central portions and improve the drainage performance when the blocks 13 ground.

Additionally, the sipe portion 10a and groove portion 10b of each width direction groove 10 may have chamfers 10c and 10d applied to the opening edges, and each sipe 11 may have chamfers 11c and 11d applied to the opening edges. With such a configuration, the drainage performance can be improved.

REFERENCE SIGNS LIST

| 1 | Tread surface |
| 2 | Circumferential groove |
| 20 | Edge of circumferential groove 2 |
| 3a, 3b | Land portion |
| 4 | Width direction groove |
| 4a | Sipe portion |
| 4b | Groove portion |
| 40 | Edge of width direction groove 4 |
| 5 | Block |
| 6 | Apex |
| 7a, 7b | Circumferential groove |
| 8 | Central land portion |
| 9a, 9b | Shoulder land portion |
| 10 | Width direction groove |
| 10a | Sipe portion |
| 10b | Groove portion |
| 10c, 10d | Chamfer |
| 11 | Sipe |
| 11c, 11d | Chamfer |
| 12, 13 | Block |
| CL | Tire equator |
| TE | Tread edge |

**Claims**

1. A tire, comprising
a tread surface (1) divided into a plurality of land portions (3a, 3b) by at least one circumferential groove (2) extending along a tire equator (CL) and tread edges (TE), wherein
at least one of the land portions (3a, 3b) divided by the at least one circumferential groove (2) and the tread edges (TE) comprises a plurality of blocks (5) divided by a plurality of width direction grooves (4);
each of the blocks (5) has a shape that protrudes from four sides toward a central portion;
each of the width direction grooves (4) comprises a sipe portion (4a);
each of the blocks (5) comprises a protrusion with an apex (6) having a tread width direction maximum length (w1) that is 30% to 40% of a tread width direction length (W) of the block (5); and
the apex (6) has a tread circumferential direction maximum length (11) that is 30% to 40% of a tread circumferential direction length (L) of the block (5).

2. A tire, comprising
a tread surface (1) divided into a plurality of land portions (3a, 3b) by at least one circumferential groove (2) extending along a tire equator (CL) and tread edges (TE), wherein
at least one of the land portions (3a, 3b) divided by the at least one circumferential groove (2) and the tread edges (TE) comprises a plurality of blocks (5) divided by a plurality of width direction grooves (4);
each of the blocks (5) has a shape that protrudes from four sides toward a central portion;
each of the width direction grooves (4) comprises a sipe portion (4a);
each of the blocks (5) has a tread width direction length (W) that is 28% to 70% of a tire ground contact width (TW); and
the ground contact width (TW) refers to the maximum straight line distance in the tread width direction on a contact surface with a flat plate, when the tire is mounted on an applicable rim and placed perpendicularly to the flat plate in a stationary state with the air pressure set to be a prescribed value, and a load corresponding to a prescribed mass is applied thereto; and the applicable rim refers to a rim prescribed by an industrial standard which is valid in an area where the tire is manufactured and used.

3. The tire according to claim 1 or 2, wherein
the sipe portion (4a) is located at a tire equator side.

4. The tire according to claim 1, 2 or 3, wherein
the sipe portion (4a) has a longitudinal direction length (d2) that is 30 to 90% of a longitudinal direction length (D) of the width direction groove (4).

5. The tire according to any one of claims 1 to 4, wherein the sipe portion (4a) has an opening width of 0.5 mm or less.

6. The tire according to claim 2, or any claim dependent on claim 2, wherein
each of the blocks (5) comprises a protrusion with an apex (6) having an area that is 1/4 or less of an area of the block (5).

7. The tire according to claim 2, or any claim dependent on claim 2, wherein
each of the blocks (5) comprises a protrusion with an apex (6) having a tread width direction maximum length (w1) that is 30% to 40% of a tread width direction length (W) of the block (5); and
the apex (6) has a tread circumferential direction maximum length (11) that is 30% to 40% of a tread circumferential direction length (L) of the block (5).

8. The tire according to any one of claims 1 to 7, wherein
each of the blocks (5) comprises a protrusion with an apex (6) being located at an overlapping region between an intermediate portion when the blocks (5) are each equally divided into three in a tread width direction and an intermediate portion when the blocks (5) are each equally divided into three in a tread circumferential direction.

9. The tire according to any one of claims 1 to 8, wherein
a tire radial height (h) from an opening edge of each of the width direction grooves (4) to the apex (6) is 0.01 or more and 0.023 or less with respect to a width direction length (W) of each of the blocks (5).

10. The tire according to any one of claims 1 to 9, wherein
a tire radial height (h) from an opening edge of each of the width direction grooves (4) to the apex (6) is 0.5 mm to 1.5 mm.

11. The tire according to claim 1, or any claim dependent on claim 1, wherein
each of the blocks (5) has a tread width direction length (W) that is 28% to 70% of a tire ground contact width (TW); and
the ground contact width (TW) refers to the maximum straight line distance in the tread width direction on a contact surface with a flat plate, when the tire is mounted on an applicable rim and placed perpendicularly to the flat plate in a stationary state with the air pressure set to be a prescribed value, and a load corresponding to a prescribed mass is applied thereto; and the applicable rim refers to a rim prescribed by an industrial standard which is valid in an area where the tire is manufactured and used.

12. The tire according to any one of claims 1 to 11, wherein

each of the blocks (5) has a tread circumferential direction length (L) that is 35% to 49% of a tire ground contact length (TL).

13. The tire according to any one of claims 1 to 12, wherein
each of the blocks (5) has a tread width direction length (W) and a tread circumferential direction length (L) that are both 35 mm or more.


**Patentansprüche**

1. Reifen, der Folgendes umfasst:

eine Lauffläche (1), die in eine Vielzahl von Stegabschnitten (3a, 3b) geteilt wird durch mindestens eine umlaufende Rille (2), die sich entlang eines Reifenäquators (CL) erstreckt, und Laufflächenkanten (TE), wobei
mindestens einer der durch die mindestens eine umlaufende Rille (2) und die Laufflächenkanten (TE) geteilten Stegabschnitte (3a, 3b) eine Vielzahl von Blöcken (5) umfasst, die durch eine Vielzahl von Breitenrichtungsrillen (4) geteilt werden,
jeder der Blöcke (5) eine Form aufweist, die von vier Seiten hin zu einem mittigen Abschnitt vorspringt,
jede der Breitenrichtungsrillen (4) einen Lamellenabschnitt (4a) umfasst,
jeder der Blöcke (5) einen Vorsprung mit einem Scheitel (6) umfasst, der eine maximale Länge (w1) in Laufflächenbreitenrichtung aufweist, die 30 % bis 40 % einer Länge (W) des Blocks (5) in Laufflächenbreitenrichtung beträgt, und
der Scheitel (6) eine maximale Länge (11) in Laufflächenumfangsrichtung aufweist, die 30 % bis 40 % einer Länge (L) des Blocks (5) in Laufflächenumfangsrichtung beträgt.

2. Reifen, der Folgendes umfasst:

eine Lauffläche (1), die durch mindestens eine umlaufende Rille (2), die sich entlang eines Reifenäquators (CL) erstreckt, und Laufflächenkanten (TE) in eine Vielzahl von Stegabschnitten (3a, 3b) geteilt wird, wobei
mindestens einer der durch die mindestens eine umlaufende Rille (2) und die Laufflächenkanten (TE) geteilten Stegabschnitte (3a, 3b) eine Vielzahl von Blöcken (5) umfasst, die durch eine Vielzahl von Breitenrichtungsrillen (4) geteilt werden,
jeder der Blöcke (5) eine Form aufweist, die von vier Seiten hin zu einem mittigen Abschnitt vorspringt,
jede der Breitenrichtungsrillen (4) einen Lamellenabschnitt (4a) umfasst,
jeder der Blöcke (5) eine Länge (W) in Laufflächenbreitenrichtung aufweist, die 28 % bis 70 % einer Reifen-Bodenberührungsbreite (TW) beträgt, und
die Reifen-Bodenberührungsbreite (TW) die maximale geradlinige Strecke in der Laufflächenbreitenrichtung auf einer Berührungsfläche mit einer ebenen Platte bezeichnet, wenn der Reifen auf einer zugelassenen Felge montiert und in einem unbeweglichen Zustand, wobei der Luftdruck auf einen vorgeschriebenen Wert festgesetzt ist, senkrecht auf der ebenen Platte platziert ist und eine Last, die einer vorgeschriebenen Masse entspricht, auf denselben ausgeübt wird und die zugelassene Felge eine Felge bezeichnet, die durch einen Industriestandard vorgeschrieben ist, der in einem Gebiet gültig ist, in dem der Reifen gefertigt und verwendet wird.

3. Reifen nach Anspruch 1 oder 2, wobei
der Lamellenabschnitt (4a) an einer Reifenäquatorseite angeordnet ist.

4. Reifen nach Anspruch 1, 2 oder 3, wobei
der Lamellenabschnitt (4a) eine Länge (d2) in Längsrichtung aufweist, die 30 bis 90 % der Länge (D) der Breitenrichtungsrille (4) in Längsrichtung beträgt.

5. Reifen nach einem der Ansprüche 1 bis 4, wobei
der Lamellenabschnitt (4a) eine Öffnungsbreite von 0,5 mm oder weniger aufweist.

6. Reifen nach Anspruch 2 oder einem von Anspruch 2 abhängigen Anspruch, wobei
jeder der Blöcke (5) einen Vorsprung mit einem Scheitel (6) umfasst, der eine Fläche aufweist, die ¼ oder weniger einer Fläche des Blocks (5) beträgt.

7. Reifen nach Anspruch 2 oder einem von Anspruch 2 abhängigen Anspruch, wobei
jeder der Blöcke (5) einen Vorsprung mit einem Scheitel (6) umfasst, der eine maximale Länge (w1) in Laufflächenbreitenrichtung aufweist, die 30 % bis 40 % einer Länge (W) des Blocks (5) in Laufflächenbreitenrichtung beträgt, und
der Scheitel (6) eine maximale Länge (11) in Laufflächenumfangsrichtung aufweist, die 30 % bis 40 % einer Länge (L) des Blocks (5) in Laufflächenumfangsrichtung beträgt.

8. Reifen nach einem der Ansprüche 1 bis 7, wobei
jeder der Blöcke (5) einen Vorsprung mit einem Scheitel (6) umfasst, der an einem Überlappungsbereich zwischen einem Zwischenabschnitt, wenn die Blöcke (5) jeweils gleichmäßig in drei in einer Laufflächenbreitenrichtung geteilt sind, und einem Zwischenabschnitt, wenn die Blöcke (5) jeweils

EP 3 470 243 B1

gleichmäßig in drei in einer Lauffächenumfangsrichtung geteilt sind, angeordnet ist.

9. Reifen nach einem der Ansprüche 1 bis 8, wobei eine Reifenradialhöhe (h) von einer Öffnungskante jeder der Breitenrichtungsrillen (4) zu dem Scheitel (6) 0,01 oder mehr und 0,023 oder weniger in Bezug auf eine Länge (W) jedes der Blöcke (5) in Breitenrichtung beträgt.

10. Reifen nach einem der Ansprüche 1 bis 9, wobei eine Reifenradialhöhe (h) von einer Öffnungskante jeder der Breitenrichtungsrillen (4) zu dem Scheitel (6) 0,5 mm bis 1,5 mm beträgt.

11. Reifen nach Anspruch 1 oder einem von Anspruch 1 abhängigen Anspruch, wobei jeder der Blöcke (5) eine Länge (W) in Laufflächenbreitenrichtung aufweist, die 28 % bis 70 % einer Reifen-Bodenberührungsbreite (TW) beträgt, und die Reifen-Bodenberührungsbreite (TW) die maximale geradlinige Strecke in der Laufflächenbreitenrichtung auf einer Berührungsfläche mit einer ebenen Platte bezeichnet, wenn der Reifen auf einer zugelassenen Felge montiert und in einem unbeweglichen Zustand, wobei der Luftdruck auf einen vorgeschriebenen Wert festgesetzt ist, senkrecht auf der ebenen Platte platziert ist und eine Last, die einer vorgeschriebenen Masse entspricht, auf denselben ausgeübt wird und die zugelassene Felge eine Felge bezeichnet, die durch einen Industriestandard vorgeschrieben ist, der in einem Gebiet gültig ist, in dem der Reifen gefertigt und verwendet wird.

12. Reifen nach einem der Ansprüche 1 bis 11, wobei jeder der Blöcke (5) eine Länge (L) in Laufflächenumfangsrichtung aufweist, die 35 % bis 49 % einer Reifen-Bodenberührungslänge (TL) beträgt.

13. Reifen nach einem der Ansprüche 1 bis 12, wobei jeder der Blöcke (5) eine Länge (W) in Laufflächenbreitenrichtung und eine Länge (L) in Laufflächenumfangsrichtung aufweist, die beide 35 mm oder mehr betragen.

## Revendications

1. Bandage pneumatique, comprenant :
une surface de bande de roulement (1) divisée en une pluralité de parties d'appui (3a, 3b) par au moins une rainure circonférentielle (2) s'étendant le long d'un équateur du bandage pneumatique (CL) et des bords de la bande de roulement (TE), dans lequel :

au moins une des parties d'appui (3a, 3b) divisée par la au moins une rainure circonférentielle (2) et les bords de la bande de roulement (TE) comprend une pluralité de pavés (5) divisés par une pluralité de rainures dans la direction de la largeur (4) ;
chacun des pavés (5) a une forme débordant de quatre côtés vers une partie centrale ;
chacune des rainures dans la direction de la largeur (4) comprend une partie de lamelle (4a) ;
chacun des pavés (5) comprend une saillie avec un sommet (6) ayant une longueur maximale (w1) dans la direction de la largeur de la bande de roulement représentant 30% à 40% d'une longueur (W) dans la direction de la largeur de la bande de roulement du pavé (5) ; et
le sommet (6) a une longueur maximale (l1) dans la direction circonférentielle du bandage pneumatique représentant 30% à 40% d'une longueur (L), dans la direction circonférentielle du bandage pneumatique, du pavé (5).

2. Bandage pneumatique, comprenant :
une surface de bande de roulement (1) divisée en une pluralité de parties d'appui (3a, 3b) par au moins une rainure circonférentielle (2) s'étendant le long d'un équateur du bandage pneumatique (CL), et des bords de la bande de roulement (TE), dans lequel :

au moins une des parties d'appui (3a, 3b) divisée par la au moins une rainure circonférentielle (2) et les bords de la bande de roulement (TE) comprend une pluralité de pavés (5) divisés par une pluralité de rainures dans la direction de la largeur (4) ;
chacun des pavés (5) a une forme débordant de quatre côtés vers une partie centrale ;
chacune des rainures dans la direction de la largeur (4) comprend une partie de lamelle (4a) ;
chacun des pavés (5) a une longueur (W), dans la direction de la largeur de la bande de roulement, représentant 28% à 70% d'une largeur de contact au sol du bandage pneumatique (TW) ; et
la largeur de contact au sol (TW) se réfère à la distance en ligne droite maximale, dans la direction de la largeur de la bande de roulement, sur une surface de contact avec une plaque plate, lorsque le bandage pneumatique est monté sur une jante applicable et est placé de manière perpendiculaire à la plaque plate dans un état stationnaire, la pression d'air étant ajustée de sorte à constituer une valeur prescrite, et une charge correspondant à un poids prescrit y étant appliquée ; la jante applicable se réfère à une jante prescrite par une norme industrielle valable dans une région où le bandage pneumatique est fabriqué et utilisé.

3. Bandage pneumatique selon la revendication 1 ou 2, dans lequel :

8

la partie de lamelle (4a) est agencée au niveau d'un côté de l'équateur du bandage pneumatique.

4. Bandage pneumatique selon la revendication 1, 2 ou 3, dans lequel :
la partie de lamelle (4a) a une longueur (d2), dans la direction longitudinale, représentant 30 à 90% d'une longueur (D) dans la direction longitudinale de la rainure dans la direction de la largeur (4).

5. Bandage pneumatique selon l'une quelconque des revendications 1 à 4, dans lequel :
la partie de lamelle (4a) a une largeur d'ouverture de 0,5 mm ou moins.

6. Bandage pneumatique selon la revendication 2, ou selon l'une quelconque des revendications dépendant de la revendication 2, dans lequel :
chacun des pavés (5) comprend une saillie avec un sommet (6) ayant une surface représentant ¼ ou moins d'une surface du pavé (5).

7. Bandage pneumatique selon la revendication 2, ou selon l'une quelconque des revendications dépendant de la revendication 2, dans lequel :

chacun des pavés (5) comprend une saillie avec un sommet (6) ayant une longueur maximale (w1), dans la direction de la largeur de la bande de roulement, représentant 30% à 40% d'une longueur (W), dans la direction de la largeur de la bande de roulement, du pavé (5) ; et le sommet (6) a une longueur maximale (11), dans la direction circonférentielle de la bande de roulement, représentant 30% à 40% d'une longueur (L), dans la direction circonférentielle de la bande de roulement, du pavé (5).

8. Bandage pneumatique selon l'une quelconque des revendications 1 à 7, dans lequel :
chacun des pavés (5) comprend une saillie avec un sommet (6) agencée au niveau d'une région à chevauchement entre une partie intermédiaire, lorsque les pavés (5) sont chacun divisés de manière égale en trois, dans une direction de la largeur de la bande de roulement, et une partie intermédiaire lorsque les pavés (5) sont chacun divisés de manière égale en trois, dans la direction circonférentielle de la bande de roulement.

9. Bandage pneumatique selon l'une quelconque des revendications 1 à 8, dans lequel :
une hauteur radiale du bandage pneumatique (h), d'un bord d'ouverture de chacune des rainures dans la direction de la largeur (4) vers le sommet (6) correspond à 0,01 ou plus et à 0,023 ou moins par rapport à une longueur dans la direction de la largeur (W) de chacun des pavés (5).

10. Bandage pneumatique selon l'une quelconque des revendications 1 à 9, dans lequel :
une hauteur radiale du bandage pneumatique (h), d'un bord d'ouverture de chacune des rainures dans la direction de la largeur (4) vers le sommet (6) est comprise entre 0,5 mm et 1,5 mm.

11. Bandage pneumatique selon la revendication 1 ou selon l'une quelconque des revendications dépendant de la revendication 1, dans lequel :

chacun des pavés (5) a une longueur (W) dans la direction de la largeur de la bande de roulement représentant 28% à 70% de la largeur de contact au sol du bandage pneumatique (TW) ; et la largeur de contact au sol (TW) se réfère à la distance en ligne droite maximale, dans la direction de la largeur de la bande de roulement, sur une surface de contact avec une plaque plate, lorsque le bandage pneumatique est monté sur une jante applicable et placé de manière perpendiculaire à la plaque plate dans un état stationnaire, la pression d'air étant ajustée de sorte à constituer une valeur prescrite, une charge correspondant à un poids prescrit y étant appliquée ; la jante applicable se référant à une jante prescrite par une norme industrielle valable dans la région où le bandage pneumatique est fabriqué et utilisé.

12. Bandage pneumatique selon l'une quelconque des revendications 1 à 11, dans lequel :
chacun des pavés (5) a une longueur (L) dans la direction circonférentielle de la bande de roulement représentant 35% à 49% d'une longueur de contact au sol (TL).

13. Bandage pneumatique selon l'une quelconque des revendications 1 à 12, dans lequel :
chacun des pavés (5) a une longueur (W) dans la direction de la largeur de la bande de roulement et une longueur (L) dans la direction circonférentielle de la bande de roulement (L) correspondant chacune à 35 mm ou plus.

# FIG. 1

# FIG. 2

## FIG. 3A

## FIG. 3B

## FIG. 3C

# FIG. 4

# FIG. 5

**REFERENCES CITED IN THE DESCRIPTION**

**Patent documents cited in the description**

- EP 2977230 A1
- EP 2781374 A2
- JP 2015147545 A